# EUROPÄISCHE PATENTSCHRIFT

(11) **EP 2 807 695 B1**
(45) Veröffentlichungstag und Bekanntmachung des Hinweises auf die Patenterteilung: **08.06.2016**
(21) Anmeldenummer: 12808815.0
(22) Anmeldetag: 20.12.2012
(51) Int. Cl.: H01M 8/04186, H01M 8/04, H01M 8/18, H01M 8/20

(54) **SYSTEM ZUR ENERGIEERZEUGUNG BZW. -SPEICHERUNG AUF ELEKTROCHEMISCHER BASIS**
SYSTEM FOR GENERATING AND/OR STORING ENERGY ON AN ELECTROCHEMICAL BASIS
SYSTÈME DESTINÉ À PRODUIRE OU STOCKER DE L'ÉNERGIE DE MANIÈRE ÉLECTROCHIMIQUE

(30) Priorität: 23.01.2012 AT 00692012
(43) Veröffentlichungstag der Anmeldung: 03.12.2014
(73) Patentinhaber: GILDMEISTER energy storage GmbH, 2355 Wiener Neudorf (AT)
(72) Erfinder: WHITEHEAD, Adam, A-7000 Eisenstadt (AT); HARRER, Martin, A-1040 Wien (AT)
(74) Vertreter: Patentanwälte Pinter & Weiss OG
(86) Internationale Anmeldenummer: PCT/EP2012/076324
(87) Internationale Veröffentlichungsnummer: WO 2013/110421

(56) Entgegenhaltungen:
- EP-A1- 0 113 159
- AT-A4- 505 560
- DE-A1- 3 843 312
- ADAM H. WHITEHEAD ET AL: "Investigation of a method to hinder charge imbalance in the vanadium redox flow battery", JOURNAL OF POWER SOURCES, Bd. 230, 1. Mai 2013 (2013-05-01), Seiten 271-276, XP055057116, ISSN: 0378-7753, DOI: 10.1016/j.jpowsour.2012.11.148

## Beschreibung

Die Erfindung betrifft System zur Energieerzeugung bzw. -speicherung auf elektrochemischer Basis, umfassend zumindest eine Durchfluß-Zelle, die aus jeweils aus zwei von unterschiedlich geladenen Elektrolytflüssigkeiten durchströmten, mittels einer Membran getrennten Halbzellen besteht, in welchen Halbzellen jeweils zumindest eine Elektrode angeordnet ist, und jeweils einem Tank für jede der Elektrolytflüssigkeiten, wobei jede Elektrolytflüssigkeit durch jeweils eine Halbzelle und deren zugehörigen Tank umgewälzt wird, wobei ein die Tanks verbindendes, gemeinsames Gasvolumen vorgesehen ist, und im Tank für die positive Elektrolytflüssigkeit zumindest ein Katalysator für die Reduktion des positiven Reaktionspartners des Redox-Paares in Kontakt mit der positiven Elektrolytflüssigkeit als auch mit dem gemeinsamen Gasvolumen angeordnet ist. Weiters insbesondere ein System, in welchem die Elektrolytflüssigkeit in der positiven Halbzelle im geladenen Zustand vier- und fünfwertiges Vanadium, Schwefelsäure und gegebenenfalls weitere Additive enthält.

Ein solches System zur Energieerzeugung bzw. -speicherung auf elektrochemischer Basis in Form einer Vanadium Redox-Durchflussbatterie geht z.B. aus der AT 505 560 A1 hervor.

In nahezu jedem in der Praxis verwendete elektrochemische Energiespeichersystem mit wässrigen Elektrolyten entsteht ein gewisser Anteil an gasförmigem Wasserstoff. Für Redox-Flow-Batterien, insbesondere Vanadium Redox-Flow-Batterien, stellt dies ein besonderes Problem dar, da Wasserstoff elektrochemisch an der negativen Elektrode entsprechend der Reaktion 2H⁺ + 2e⁻ ↔ H₂ gebildet wird und die erwünschte Reaktion, beispielsweise V³⁺ + e⁻ ↔ V²⁺ an der negativen Elektrode behindert.

Die Stärke der Wasserstoffentwicklung an der negativen Elektrode ist beträchtlich höher als parasitische Reaktionen (z.B. O₂ or CO₂ Bildung) an der positiven Elektrode, so dass ein Unterschied im Ladungszustand (SOC, state-of-charge) an der positiven bzw. negativen Elektrode entsteht. Für die Vanadium-Batterie hat dies zur Folge, dass nach einer gewissen Dauer der Wasserstoffbildung der negative Elektrolyt mehr V³⁺ aufweist als der positive Elektrolyt VO²⁺ enthält. Damit vermindert sich die Kapazität des Systems.

Um diese Wasserstoffbildung bzw. das Ungleichgewicht im Ladungszustand für Redox-Flow-Batterien zu berücksichtigen wurden bereits unterschiedliche, jedoch baulich und steuerungsmäßig aufwendige Lösungen vorgeschlagen. So wird gemäß N. H. Hagedorn, NASA redox storage syste, development project, in Final Report DOE/NASA/12726-24, NASA Lewis Research Center, Cleveland, Ohio (1984) als auch der US 4159366 für eine Fe-Cr Redox-Flow-Batterie die Verwendung von Rebalance-Zellen vorgeschlagen. Diese bestehen unter anderem aus einer Wasserstoff-Anode und einer Eisen-Kathode, die durch eine Ionenaustauscher-Membran getrennt sind, und welche auf der Seite der Gaselektrode mit Wasserstoff versorgt werden. Später wurde eine Version entwickelt, bei der bevorzugt Chlor entsteht anstatt der Wasserstoff-Reduktion. Eine ähnliche Lösung wird auch in der US 5258241 vorgestellt.

Die JP 07211347 offenbart eine Rebalance-Zelle unter anderem für Vanadium Redox-Flow-Batterien, in denen VO₂⁺ an einer Elektrode einer durch eine Membran unterteilten Zelle zu VO²⁺ reduziert und an der anderen Elektrode aus wässriger Schwefelsäure Sauerstoff entsteht. Diese Konstruktion hat ähnliche Nachteile wie die im vorigen Absatz beschriebenen Systeme. Zusätzlich kommt hinzu, dass ein periodisches Auffüllen mit Wasser zur Vermeidung von Dehydration der Anoden-Halbzelle nötig ist und zur Herstellung des Gleichgewichtes Energieeinsatz (elektrische Energie) nötig ist.

Rebalance-Zellen müssen auch in aufwendige Weise überwacht werden, denn bei zu grosser durch die Zelle geführte Ladung erleidet der Elektrolyt eine Verminderung in nutzbarer Kapazität, da die Zelle dann in entgegengesetzter Richtung ausser Balance gerät.

Für Blei-Säure-Batterien sind Gasreformierungseinrichtungen bekannt und üblich. Eine Anwendung bei Redox-Flow-Batterien mit in Lösung befindlichen elektroaktiven Spezies ist dafür aber nicht vorgesehen. Ein Katalysator wird hier zur Wiedereinstellung des Ladungszustandes der elektroaktiven Spezies eingesetzt.

Erfindungsgemäß wird daher unter Vermeidung der oben erwähnten Nachteile eine neue Lösung vorgeschlagen, die dadurch gekennzeichnet ist, dass der Katalysator auf einer auf der positiven Elektrolytflüssigkeit schwimmenden Anordnung aufgebracht ist und diese derart angeordnet ist, dass die positive Elektrolytflüssigkeit durch die Umwälzung durch die zugehörige Halbzelle periodisch oder kontinuierlich über eine der Oberflächen des Katalysators im Tank für die positive Elektrolytflüssigkeit strömt. Damit kommt das erfindungsgemäße System ohne zusätzliche Zellen mit Umwälzung aus, ist passiv und in sogar aktiv, ohne dass aktiv gepumpt oder zwangsentladen werden muss. Der benötigte Wasserstoff wird innerhalb des Systems gebildet, muss nicht von extern zugeführt werden, und wird zum "Entladen" des positiven Elektrolyten verwendet anstelle zur "Aufladung" des negativen Elektrolyten.

Weiters kann das bei Rebalance-Zellen notwenige oftmalige Überwachen des Ladungszustandes separat für beide Elektrolyten vermieden bzw. beträchtlich reduziert werden, das dort vorgesehen ist, um die Ladungsgröße zur Einstellung des Ladungszustandes in einen brauchbaren Bereich zu ermitteln. Dies ist sehr aufwendig und auch kostspielig.

Gemäß einer ersten Ausführungsform der Erfindung ist der Katalysator nahe einem Einlass und/oder Auslass für die Elektrolytflüssigkeit angeordnet. Damit ist ohne aufwendige Apparaturen eine konstante Strömung über den Katalysator sichergestellt.

Vorteilhafterweise ist der Katalysator auf einer auf einem Rahmen aufgespannten Membran aufgebracht, womit in einfacher Weise der Kontakt des Katalysators mit der positiven Elektrolytflüssigkeit als auch dem gemeinsamen Gasvolumen erzielt ist.

Eine andere Variante sieht zu diesem Zweck vor, dass der Katalysator auf ein teilweise in die positive Elektrolytflüssigkeit eingetauchtes Gewebe aufgebracht ist.

Um einen einfachen Zutritt des den Wasserstoff enthaltenden Gases zum Katalysator zu ermöglichen und gleichzeitig den Zutritt des positive Elektrolyten zur anderen, unbeschichteten Seite zu gestatten, weist der Katalysator vorteilhafterweise zumindest eine Gasdiffusionsschicht auf, vorzugsweise leitende Fasern enthaltend.

Eine besonders bewährte Ausführungsform einer erfindungsgemäßen Anordnung ist dadurch gekennzeichnet, dass ein auf Platin und/oder Iridiumdioxid basierender Katalysator vorgesehen ist.

Vorzugsweise ist das erfindungsgemäße System mit Einrichtungen zur Erzeugung bzw. Aufrechterhaltung einer Gasströmung über den Katalsator versehen, was zu einer Verbesserung der katalytischen Reaktion beiträgt.

Vorteilhafterweise sind gemäß einer weiteren Ausführungsform Einrichtungen für einen Druckausgleich des gemeinsamen Gasvolumens gegenüber der Umgebung vorgesehen.

Alle oben genannten Merkmale kommen besonders vorteilhaft und unter Erzielung der bislang genannten Effekte und Vorteile auch bei einem System zur Energieerzeugung bzw. -speicherung auf elektrochemischer Basis zum Einsatz, bei welchem die Elektrolytflüssigkeit in der positiven Halbzelle im geladenen Zustand vier- und fünfwertiges Vanadium, Schwefelsäure und gegebenenfalls weitere Additive enthält. Damit werden die elektrochemischen Zellen für die Ladung als auch die Entladung der Vanadium Redox-Flow-Batterie verwendet anstelle von lediglich der Entladung wie bei einer Redox-Brennstoffzelle.

Wenngleich die gegenständliche Erfindung hauptsächlich für die Verwendung mit Vanadium Redox-Flow-Batterien gedacht ist, kann sie prinzipiell für alle Arten von Redox-Flow-Batterien mit wässrigen Elektrolyten angewendet werden, beispielsweise auch auf Basis von Eisen und Chrom.

In der nachfolgenden Beschreibung soll die Erfindung anhand von Ausführungsbeispielen und unter Bezugnahme auf die beigefügten Zeichnungen näher erläutert werden.

Dabei zeigt die Fig. 1 in schematischer Darstellung die Tanks einer Redox-Flow-Batterie mit einem erfindungsgemäßen Katalysator nahe dem Einlass des positiven Elektrolyten, Fig. 2 ist eine vorteilhafte baulichen Ausführungsform eines Katalysators gemäß der Erfindung, und die Fig. 3 ist ein Diagramm des von einer kleinen elektrochemischen Zelle erzeugten Stroms mit kurzzeitiger Verwendung eines erfindungsgemäßen Katalysators.

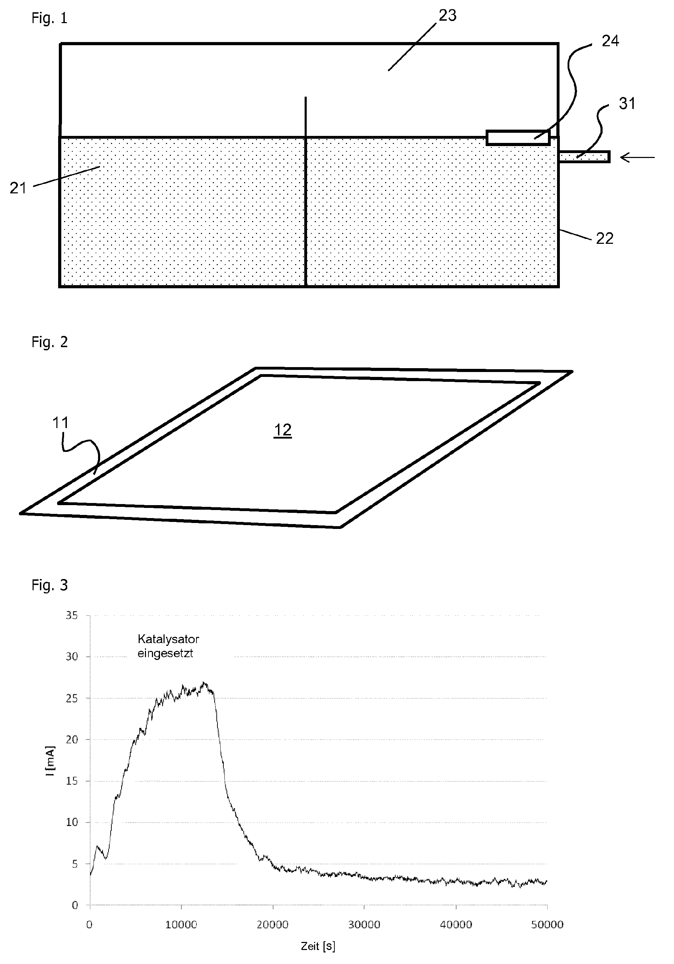

Die Fig. 1 zeigt die Tanks einer Durchfluss-Zelle einer Redox-Flow-Batterie als bevorzugtes Beispiel für ein System zur Energieerzeugung bzw. -speicherung auf elektrochemischer Basis. In den Tanks befinden sich die unterschiedlich geladenen Elektrolytflüssigkeiten, die zur Energieerzeugung bzw. Energiespeicherung in den Halbzellen und anschließend weider zurück in die Tanks umgewälzt werden, wobei die negative Elektrolytflüssigkeit mit 21 und die positive Elektrolyflüssigkeit mit 22 bezeichnet ist.

Die Tanks können räumlich getrennte Behälter sein, können aber auch, wie in der Fig. 1 dargestellt, als zwei, durch eine Trennwand abgeteilte Abteile in einem gemeinsamen Behälter gebildet sein, welche Abteile unmittelbar aneinandergrenzen. Die positive Elektrolytflüssigkeit kann beispielsweise im geladenen Zustand vier- und fünfwertiges Vanadium, Schwefelsäure und gegebenenfalls weitere Additive enthalten. Oberhalb der Elektrolytflüssigkeiten 21, 22 ist vorzugsweise oberhalb der beiden Tanks ein diese beiden Tanks verbindendes, gemeinsames Gasvolumen 23 vorgesehen. Im Fall eines gemeinsamen Behälters mit zwei Abteilen für die Elektrolytflüssigkeiten 21, 22 ist das gemeinsame Gasvolumen 23 durch den von der Trennwand nicht geteilten Bereich oberhalb der Abteile gebildet. Weiters ist im Tank des positiven Elektrolyten 22 zumindest ein Katalysator 24 für die Reduktion des positiven Reaktionspartners des Redox-Paares in Kontakt mit der positiven Elektrolytflüssigkeit als auch dem gemeinsamen Gasvolumen 23 angeordnet. Wie aus der Fig. 1 ersichtlich ist, ist der Katalysator 24 erfindungsgemäß derart angeordnet, dass die positive Elektrolytflüssigkeit 22 periodisch oder kontinuierlich über eine von dessen Oberflächen strömt, was hier vorteilhafterweise durch Platzierung nahe dem Einlass 31 für die Elektrolytflüssigkeit bewirkt ist. Auch eine Platzierung nahe dem Auslass wäre möglich.

Der Katalysator 24 besteht aus einer Struktur aus katalytisch wirksamem Material oder aus einem mit diesem Material beschichteten Träger. Durch seine Anordnung wird bewirkt, dass ein Teilbereich des Katalysators 24 mit der positiven Elektrolyflüssigkeit 22 in Kontakt ist, und dass ein anderer Teilbereich mit dem Wasserstoff enthaltenden und an der negativen Elektrode gebildeten Gas in Kontakt ist. Derart entsteht eine Drei-Phasen-Grenzfläche zwischen dem positiven Elektrolyten 22, dem Gas im Volumen 23 und dem Katalysator 24.

Da das Volumen der Elektrolytflüssigkeiten 21, 22 in den Tanks und damit die Höhe des Elektrolylevels typischerweise um einige Zentimeter schwankt (aufgrund des Massetransportes durch die Ionenaustauscher-Membran zwischen den Halbzellen) ist der Katalysator 24 entweder zum Teil in die positive Elektrolytflüssigkeit 22 eingetaucht oder vorteilhafterweise für die Nachführung dieser Höhenschwankung ausgelegt, beispielsweise durch Ausführung als Schwimmkörper mit katalytisch wirksamer Beschichtung. Ein Beispiel dafür ist in Fig. 2 dargestellt, die einen schwimmfähigen Rahmen 11, vorteilhafterweise aus PVC, PE, PP oder anderem stabilen Material) mit einer darin aufgespannten und katalytisch beschichteten Membran 12 zeigt.

Geeignet Membranen können Ionenaustauscher-Membranen (wie beispielsweise Nafion ® von DuPont) oder mikroporöse Arten (wie etwa mikroporöse Polyäthylen-Separatoren, oftmals bei Blei-Säure-Batterien verwendet) sein. Die katalytisch wirksame Beschichtung kann auf einer oder auf beiden Seiten vorhanden sein und könnte auch auf leitende Teilchen (wie etwa Industriekohle) aufgebracht sein, mit welchen die Membran dann beschichtet ist (wie an sich bei Brennstoffzellen üblich).

Auch ein Katalysator ähnlich einer Gasdiffusionselektrode und ohne Membranträger wäre denkbar. Das umfasst eine katalytisch wirksame Schicht auf einer wasserabweisenden, porösen und elektrisch leitenden Schicht. Diese kann auch zusätzlich elektrisch leitende Fasern (insbesondere Graphitfasern wie beispielsweise ein Carbongewebe) enthalten, um die aktive Oberfläche für die Reduktions-Reaktion zu vergrößern. Außerdem erlaubt die wasserabweisende, poröse und elektrisch leitende Schicht den einfachen Zutriff des den Wasserstoff enthaltenden Gases zum Katalysatormaterial von einer Seite, während der Zutritt der positiven Elektrolytflüssigkeit zur anderen, unbeschichteten Seite erhalten bleibt.

Im Fall der Vanadium Redox-Flow-Batterie wird dadurch eine Reduktion von VO₂⁺ im positiven Tank unter Verwendung des an der negative Elektrode gebildeten H₂ bewirkt, wodurch der Ladungszustand in beiden Tanks gleich gehalten wird (d.h. dass der durchschnittliche Oxidationszustand des Vanadiums beim Anfangswert von 3.5 gehalten werden soll).

Die erfindungsgemäße Einrichtung arbeitet passiv, d.h. ohne Energieeintrag aus externen Quellen, allein durch die Reaktion zwischen dem gasförmigen Wasserstoff und den elektroaktiven Spezies im positiven Elektrolyten 22 in geladenem Oxidationszustand, beispielsweise der Reaktion VO₂⁺ + H⁺ + ¼H₂ ↔ VO²⁺ + H₂O. Obwohl diese Reaktion thermisch vorteilhaft ist, (ΔG⁰ ∼ -97 kJ mol⁻¹) findet sie bei Raumtemperatur und ohne Anwesenheit eines geeigneten Katalysators nur in vernachlässigbarem Ausmass statt.

Selbstverständlich können mehrere katalytische Einrichtungen 24 im Tank des positiven Elektrolyten 22 vorgesehen sein, um die Verwendung des Wasserstoffes zu verbessern. Weiters können Einrichtungen zum Bewirken einer Gasströmung über den Katalysator 24 vorgesehen sein, entweder aktive Einrichtungen oder solche zur Erzeugung und Leitung von Konvektionsströmung.

Als katalytisch wirksame Substanzen können prinzipiell alle möglichen Stoffe verwendet werden, wobei insbesondere für die Wasserstoff-Reduktions-Reaktion in saurer Umgebung fein disperses Pt, Pt-Ru, Pt-Mo, Pt-W, Pt-Co-Mo, Pt-Co-W, Pd, Pt-Cr, IrO₂ etc. vorteilhaft sind. Wichtig ist dabei eine ausreichende Stabilität gegenüber Auflösung im Elektrolyten.

Da der Verbrauch des Wasserstoffgases zu einer Druckminderung im Gasvolumen 23 oberhalb der Tanks gegenüber der Umgebung führen kann, sind vorteilhafterweise Einrichtungen zum Druckausgleich vorgesehen, beispielsweise zum Einbringen von Inertgas aus einer Druckgasquelle. Andererseits kann Überdruck aufgrund der Wasserstoffbildung durch Ableitung des Gases aus dem Volumen 23 über eine Leitung mit integrierter Flammensperre abgebaut werden.

Anhand der folgenden Anwendungsbeispiele sollen die Vorteile der erfindungsgemäßen Anordnung erläutert werden.

### Anwendungsbeispiel 1:

Bei einem Testsystem mit einer Zelle mit einem unterteilten Tank und gemeinsamem Gasvolumen wurden voll geladene positive und negative Elektrolyten eingebracht, wobei der positive Elektroly nominell 0.8 M (VO₂)₂SO₄, 3.2 M H₂SO₄ und der negative Elektrolyt 1.6 M VSO₄, 2.4 M H₂SO₄ aufwiesen. Die Zelle wurde auf konstant 1.75 V gehalten, so dass die Elektrolyten voll geladen gehalten wurden. Dabei wurde der Haltestrom kontinuierlich gemessen.

In das gemeinsame Gasvolumen oberhalb des Tanks wurde Wasserstoffgas eingepumpt, bis dessen Konzentration 90% erreichte, wonach der Tank isoliert und abgedichtet wurde. Mittels eines Gassensors, der bei Sauerstoffabwesenheit arbeitet, wurde kontinuierlich die Wasserstoffkonzentration gemessen. Das System wurde mit einem allein im Gasvolumen platzierten Katalysator betrieben, der nicht mit dem Elektrolyt in Kontakt stand, wobei der Haltestrom konstant mit ca. 40 mA gemessen wurde.

### Anschließend wurde ein mit IrO₂ beschichtetes Ti-Gitter teilweise in den Elektrolyt getaucht, so dass sich etwa die Hälfte des Gitters im positiven Elektrolyten befand und die andere Hälfte im darüber liegenden Gasvolumen. Nach etwa fünf Minuten konnte eine Erhöhung des Stroms durch die Zelle in Antwort auf eine Reduktion des positiven Elektrolyten festgestellt werden. Nach 39 Minuten wurde das katalytische Gitter entfernt. Der Strom blieb noch einige Minuten oberhalb des Basisniveaus, bis der positive Elektrolyt wieder voll geladen war. Dann stellte sich wieder ein Strom von 40 mA ein.

Damit war die Effektivität des Katalysators für die Reduktion des positiven Elektrolyten durch Oxidation des Wasserstoffs im Gasvolumen nachweisbar.

### Anwendungsbeispiel 2:

Der obige Test wurde mit einem Grafitfilz von 20 cm² Fläche und 5 mm Dicke wiederholt, der um den unteren, eingetauchten Teil des mit IrO₂ beschichtetes Ti-Gitter gewickelt war. Die Katalysatoranordnung blieb für 36 Minuten untergetaucht, wurde dann entfernt und danach die Überschussladung gemessen.

Die Resultate waren wie folgt:

| | Ladung [mAh] | Eintauchzeit [h] | Äquivalenter Rebalance-Strom [mA] |
|---|---|---|---|
| IrO₂-Ti | 11,5 | 0,63 | 18 |
| IrO₂-Ti + Grafitfilz | 104,8 | 0,6 | 175 |

Diese Zahlen zeigen, dass die zusätzliche Fläche des Filzes für die Redukton des VO₂⁺ vorteilhaft war. Das ist zu erwarten, wenn die Reaktionsrate durch die Vanadium-Reduktion begrenzt ist anstelle durch die Wasserstoff-Oxidation (die am Platin auftritt).

Der Ir02 auf Ti Katalysator (and auch Pt auf Ti) und der Katalysator mit Ir02 auf Ti in Verbindung mit dem Grafitfilz hatten einen geringen Effekt für die Rekombination des Wasserstoffes mit dem positive Elektrolyten.

Jedoch wurde eine Membrananordnung für eine Brennstoffzelle als wirksam gefunden, bei der eine katalytische Pt-Ir Beschichtung auf einer Membran aufgetragen war. Mit dieser Membran im Gasvolumen (nicht in Kontakt mit dem Elektrolyten) floss ein Strom von 3 mA durch die Zelle. Nach Kontaktieren des Katalysators mit dem Elektrolyten (er schwamm auf der Elektrolyflüssigkeit, mit gutem Kontakt zu sowohl Elektrolyt als auch Wasserstoffenthaltendem Gas) stieg der Strom auf etwa 27 mA an. Nach Entfernung des Katalysators aus dem Elektrolyten fiel der Strom langsam wieder zurück, bis alles V(IV) reoxidiert war. Die Fig. 3 stellt ein Strom-Zeit-Diagramm für diesen ähnlichen Versuch bei 83% Konzentration des Wasserstoffes und teilweises Eintauchen eines membrangetragenen Katalysatormaterials zwischen den Zeitmarken bei 2000 und 13000 Sekunden dar.

Der den Basis-Strom übersteigende Durchschnitts-Strom Icatalytic, war dabei relativ unabhängig vom Wasserstoffgehalt im Gasvolumen, wie die nachfolgende Tabelle zeigt:

| Durchschnittliche H2-Konzentration | Ikatalytisch [mA] |
|---|---|
| 83% | 24 |
| 28% | 21 |
| 8% | 23 |

Die Fläche des membrangetragenen Katalysators war 5.0 cm² und das Experiment wurde bei Raumtemperatur durchgeführt.

## Patentansprüche

1. System zur Energieerzeugung bzw. -speicherung auf elektrochemischer Basis, umfassend zumindest eine Durchfluß-Zelle, die aus jeweils aus zwei von unterschiedlich geladenen Elektrolytflüssigkeiten (21, 22) durchströmten, mittels einer Membran getrennten Halbzellen besteht, in welchen Halbzellen jeweils zumindest eine Elektrode angeordnet ist, und jeweils einem Tank für jede der Elektrolytflüssigkeiten (21, 22), wobei jede Elektrolytflüssigkeit (21, 22) durch jeweils eine Halbzelle und deren zugehörigen Tank umgewälzt wird, wobei ein die Tanks verbindendes, gemeinsames Gasvolumen (23) vorgesehen ist, und im Tank für die positive Elektrolytflüssigkeit (22) zumindest ein Katalysator (24) für die Reduktion des positiven Reaktionspartners des Redox-Paares in Kontakt mit der positiven Elektrolytflüssigkeit (22) als auch mit dem gemeinsamen Gasvolumen (23) angeordnet ist, **dadurch gekennzeichnet, dass** der Katalysator (24) auf einer auf der positiven Elektrolytflüssigkeit (22) schwimmenden Anordnung aufgebracht ist und diese derart angeordnet ist, dass die positive Elektrolytflüssigkeit (22) durch die Umwälzung durch die zugehörige Halbzelle periodisch oder kontinuierlich über eine der Oberflächen des Katalysators (24) im Tank für die positive Elektrolytflüssigkeit (22) strömt.

2. System nach Anspruch 1, **dadurch gekennzeichnet, dass** der Katalysator (24) nahe einem Einlass (31) und/oder Auslass für die Elektrolytflüssigkeit (22) angeordnet ist, um eine konstante Strömung über den Katalysator sicherzustellen.

3. System nach Anspruch 1 oder 2, **dadurch gekennzeichnet, dass** der Katalysator (24) auf einer auf einem Rahmen (11) aufgespannten Membran (12) aufgebracht ist.

4. System nach Anspruch 1 oder 2, **dadurch gekennzeichnet, dass** der Katalysator (24) auf ein teilweise in die positive Elektrolytflüssigkeit (22) eingetauchtes Gewebe aufgebracht ist.

5. System nach einem der Ansprüche 1 bis 4, **dadurch gekennzeichnet, dass** der Katalysator (24) zumindest eine Gasdiffusionsschicht aufweist, vorzugsweise leitende Fasern enthaltend.

6. System nach einem der Ansprüche 1 bis 5, **dadurch gekennzeichnet, dass** ein auf Platin und/oder Iridiumdioxid basierender Katalysator (24) vorgesehen ist.

7. System nach einem der Ansprüche 1 bis 6, **dadurch gekennzeichnet, dass** Einrichtungen zur Erzeugung bzw. Aufrechterhaltung einer Gasströmung über den Katalysator (24) vorgesehen sind.

8. System nach einem der Ansprüche 1 bis 7, **dadurch gekennzeichnet, dass** Einrichtungen für einen Druckausgleich des gemeinsamen Gasvolumens (23) gegenüber der Umgebung vorgesehen sind.

9. System zur Energieerzeugung bzw. -speicherung auf elektrochemischer Basis, umfassend zumindest eine Durchfluß-Zelle, die aus jeweils aus zwei von unterschiedlich geladenen Elektrolytflüssigkeiten (21, 22) durchströmten, mittels einer Membran getrennten Halbzellen besteht, wobei die Elektrolytflüssigkeit in der positiven Halbzelle im geladenen Zustand vier- und fünfwertiges Vanadium, Schwefelsäure und gegebenenfalls weitere Additive enthält, wobei in den Halbzellen jeweils zumindest eine Elektrode angeordnet ist, sowie jeweils einem Tank für jede der Elektrolytflüssigkeiten (21, 22), **dadurch gekennzeichnet, dass** das System gemäß einem der Ansprüche 1 bis 8 ausgebildet ist.

## Claims

1. System for energy generation or storage on an electrochemical basis, comprising at least one flow cell, each flow cell consisting of two half-cells through which differently charged electrolyte liquids (21, 22) flow and which are separated by a membrane, at least one electrode being disposed in each of these half-cells, and a tank being provided for each of the electrolyte liquids, wherein each electrolyte liquid (21, 22) is circulated through a half-cell each and the tank corresponding to the half-cell, wherein a common gas volume (23) connecting the tanks is provided, that at least one catalyst (24) for reducing the positive reaction partner of the redox pair in contact with the positive electrolyte liquid (22) and also with the common gas volume (23) is disposed in the tank for the positive electrolyte liquid (22) **characterized in that** the catalyst (24) is applied to an arrangement floating on the positive electrolyte liquid (22), the arrangement being arranged in such a way that the positive electrolyte liquid (22) flows periodically or continually over one of the surfaces of the catalyst (24) due to the circulation of the positive electrolyte liquid (22) through the corresponding half-cell.

2. System as claimed in Claim 1, **characterized in that** the catalyst (24) is disposed close to an inlet (31) and/or outlet for the electrolyte liquid (22).

3. System as claimed in Claim 1 or 2, **characterized in that** the catalyst (24) is applied to a membrane (12) fixed on a frame (11).

4. System as claimed in Claim 1 or 2, **characterized in that** the catalyst (24) is applied to a fabric immersed in the positive electrolyte liquid (22).

5. System as claimed in any one of Claims 1 to 4, **characterized in that** the catalyst (24) has at least one gas diffusion layer, preferably containing conductive fibers.

6. System as claimed in any one of Claims 1 to 5, **characterized in that** catalysts (24) based on platinum and/or iridium dioxide are provided.

7. System as claimed in any one of Claims 1 to 6, **characterized in that** devices for generating or maintaining a gas flow over the catalyst (24) are provided.

8. System as claimed in any one of Claims 1 to 7, **characterized in that** devices for equalizing the pressure of the common gas volume (23) relative to the environment are provided.

9. System for energy generation or storage on an electrochemical basis, comprising at least one flow cell, each flow cell consisting of two half-cells through which differently charged electrolyte liquids (21, 22) flow and which are separated by means of a membrane, wherein the electrolyte liquid in the positive half-cell in the charged state contains tetravalent and pentavalent vanadium, sulphuric acid and optionally further additives, at least one electrode being disposed in each of the half-cells, and a tank being provided for each of the electrolyte liquids (21, 22), **characterized in that** the system is designed as claimed in any one of Claims 1 to 8.

## Revendications

1. Système de production ou de stockage d'énergie sur une base électrochimique, comprenant au moins une cellule d'écoulement qui est constituée chacune de deux demi-cellules, séparées par une membrane et traversées par des électrolytes liquides (21, 22) de charges différentes, chaque demi-cellules contenant au moins une électrode, et d'un réservoir destiné à chacun des électrolytes liquides (21, 22), chaque électrolyte liquide (21, 22) circulant à travers chaque demi-cellule et son réservoir associé, un volume de gaz commun (23) étant prévu qui relie les réservoirs, et au moins un catalyseur (24) destiné à la réduction du partenaire de réaction positif du couple d'oxydoréduction étant disposé en contact avec l'électrolyte liquide positif (22) et le volume de gaz commun (23) dans le réservoir destiné à l'électrolyte liquide positif (22), **caractérisé en ce que** le catalyseur (24) est appliqué un dispositif flottant sur l'électrolyte liquide positif (22) et ce dispositif est disposé de telle sorte que l'électrolyte liquide positif (22) s'écoule, par la circulation à travers la demi-cellule associée, périodiquement ou en continu sur une des surfaces du catalyseur (24) dans le réservoir destiné à l'électrolyte liquide positif (22).

2. Système selon la revendication 1, **caractérisé en ce que** le catalyseur (24) est disposé à proximité d'une entrée (31) et/ou d'une sortie de l'électrolyte liquide (22) pour assurer un débit constant sur le catalyseur.

3. Système selon la revendication 1 ou 2, **caractérisé en ce que** le catalyseur (24) est appliqué sur une membrane (12) tendue sur un cadre (11).

4. Système selon la revendication 1 ou 2, **caractérisé en ce que** le catalyseur (24) est appliqué sur un tissu plongé partiellement dans l'électrolyte liquide positif (22).

5. Système selon l'une des revendications 1 à 4, **caractérisé en ce que** le catalyseur (24) comporte au moins une couche de diffusion de gaz, contenant de préférence des fibres conductrices.

6. Système selon l'une des revendications 1 à 5, **caractérisé en ce qu'**il est prévu un catalyseur (24) à base de platine et/ou d'iridium.

7. Système selon l'une des revendications 1 à 6, **caractérisé en ce que** des moyens sont prévus pour générer ou maintenir un écoulement de gaz sur le catalyseur (24).

8. Système selon l'une des revendications 1 à 7, **caractérisé en ce que** des moyens sont prévus pour compenser la pression du volume de gaz commun (23) par rapport à l'environnement.

9. Système de production ou de stockage d'énergie sur une base électrochimique, comprenant au moins une cellule d'écoulement qui est constituée chacune de deux demi-cellules, séparées par une membrane et traversées par des électrolytes liquides (21, 22) de charges différentes, l'électrolyte liquide dans la demi-cellule positive contenant à l'état chargé du vanadium tétravalent et pentavalent, de l'acide sulfurique et le cas échéant d'autres additifs, les demi-cellules contenant chacune au moins une électrode, et d'un réservoir destiné à chacun des électrolytes liquides (21, 22), **caractérisé en ce que** le système est réalisé selon l'une quelconque des revendications 1 à 8.
